# EUROPEAN PATENT APPLICATION

(11) **EP 1 850 571 A1**
(43) Date of publication of application: **31.10.2007**
(21) Application number: 07104917.5
(22) Date of filing: 26.03.2007
(51) Int. Cl.: H04M 1/725

(54) **Supporting use of wireless connection via electrical interface**

(30) Priority: 26.04.2006 WO PCT/IB2006/051305
(71) Applicant: Nokia Corporation, 02150 Espoo (FI)
(72) Inventor: Lafuente, Mr Javier, 28003, Madrid (ES)
(74) Representative: Cohausz & Florack

(57) **Abstract**

An accessory device 300 comprises a wireless communication interface 320 and an electrical interface 310. In order to hide a wireless communication protocol used for data received via the wireless communication interface 320 from a device 100 that is connected to the accessory device 300 via the electrical interface 310, a processing unit 330 is adapted to convert data received via the wireless communication interface and having a format required for a wireless communication service into a format required for a specific service other than a wireless communication service, and to provide the converted data for a transmission via the electrical interface 310.

## Description

### FIELD OF THE INVENTION

The invention relates to a method, to an accessory device, to a system, to a software program code and to a software program product supporting the use of a connection via an electrical interface.

### BACKGROUND OF THE INVENTION

The document "Universal Serial Bus Specification", Revision 2.0, April 27, 2000, by Compaq, Hewlett-Packard, Intel, Lucent, Microsoft, NEC and Philips defines an industry-standard universal serial bus (USB), which enable an easy to use connection between a personal computer (PC) acting as a host and another device acting as a PC peripheral. Host and peripheral may be interconnected by a USB cable. The host is responsible for initiating all data transactions between host and peripheral, while the peripheral responds to bus requests from the host.

In addition to PCs, a growing number of other devices, like home stereo systems, car audio systems, television sets, etc., are equipped with a corresponding USB host port as well, to access the media files stored in USB drives.

Currently, however, only mass storage devices, like memory sticks, can be plugged directly into USB host ports of devices other than PCs. In order to play media files that are stored in another portable device via a media player equipped with a USB host port, a USB cable or an audio cable has to be used for connecting the portable device to the USB host port.

On the other hand, some portable devices like mobile phones or Personal Digital Assistants (PDA), are provided with increasing memory space. Thus, they would be suited to store most of the media files and work documents that a user wishes to carry along, and it would be desirable to provide an easy access to such memory space.

Some portable devices also support technologies which enable a data exchange via a short-range wireless link, for example a Bluetooth^{™} connection or a Wireless Local Area Network (WLAN) connection.

Many PCs and most of the other potential host devices, however, do not provide any wireless short-range connectivity in addition to a USB interface.

A PC, which does not comprise an integrated Bluetooth^{™} interface, can be enabled by means of a Bluetooth^{™} dongle that can be plugged to a USB host port to exchange data via a Bluetooth^{™} connection. Such Bluetooth^{™} dongles have the disadvantage, however, that they can only be used with PCs and not with other host devices. Further, they are rather difficult to configure, since they require additional driver software in the PC. Moreover, the Bluetooth user interface of such Bluetooth^{™} dongles is often difficult to use.

US patent application US 2003/0083013 A1 proposes a system for transparently attaching wireless peripherals to a computer using a Bluetooth^{™} wireless network. An interface is used for performing a translation between a Bluetooth^{™} wireless network adapter of the computer and a communications bus, like a USB, of the computer. The Bluetooth^{™} wireless network adapter itself may optionally be realized in the form of a Bluetooth^{™} dongle. While this approach avoids the necessity of adding a software stack to the operating system of the computer, and thus a deterioration of the computer's reliability and performance, it requires the implementation of a dedicated interface in the computer.

The "Wireless Universal Serial Bus Specification", Revision 1.0, May 12, 2005, by Agere, Hewlett-Packard, Intel, Microsoft, NEC, Philips, Samsung, equally requires a host device to be equipped with additional software and hardware to provide the wireless connectivity. Upgrading a conventional device to provide wireless connectivity in accordance with this specification would require a significant effort and changes in software and/or hardware or the device. Consequently, this kind of upgrading is not an optimal solution for conventional devices having standard USB 1.0, USB 1.2 or USB 2.0 interfaces.

Moreover, many devices are provided with other types of electrical interfaces in addition to or instead of a USB interface, but not with a wireless interface.

Digital cameras and some MP3 (Moving Picture Experts Group-1 Audio Layer 3) players, for example, use memory cards, like secure digital (SD) cards, miniSD cards or Compac Flash (CF) cards, for file storage, but do normally not have any wireless capabilities.

Some PDAs, which do not have own wireless capabilities, can be extended with wireless cards, which may also provide memory space in parallel. However, these wireless cards require drivers and operating system support in the PDA. In addition they require the device to support input/output (I/O) operations. Therefore, they cannot be installed in most other devices than PDAs, like digital cameras or MP3 players, which only support standard memory cards. The wireless cards may even be physically too large to fit into normal SD slots.

### SUMMARY OF THE INVENTION

It is an object of the invention to extend the usability of the capabilities of a device having an electrical interface, for instance a USB receptacle or a memory card slot.

An accessory device is proposed, which comprises a wireless communication interface and an electrical interface. The accessory device further comprises a processing unit. The processing unit is adapted to convert data received via the wireless communication interface and having a format required for a wireless communication service into a format required for a specific service other than a wireless communication service. The processing unit is further adapted to provide the converted data for a transmission via the electrical interface.

The processing unit can be implemented in hardware and/or software. Alternatively, it could be for instance a chip or chipset realizing the required functions.

The electrical interface can be any desired type of interface, like a USB plug or the electrical contacts of a memory card. In case it is a USB plug, the specific service can be for instance a specific USB service. In case it is a USB plug, the accessory device can further be for instance a USB dongle which looks like a personal pen-drive.

Moreover, a system is proposed, which comprises the proposed accessory device and in addition a second device including a wireless communication interface adapted to exchange data with the wireless communication interface of the accessory device.

The system may comprise in addition a third device. The third device may include an electrical interface fitting to the electrical interface of the accessory device, for instance a USB receptacle fitting to a USB plug.

Moreover, a method is proposed, which comprises receiving data via a wireless communication interface of an accessory device. The method further comprises converting received data, which has a format required for a wireless communication service, into a format required for a specific service other than a wireless communication service. The method further comprises providing the converted data for transmission via an electrical interface of the accessory device.

Moreover, a software program code is proposed, which is adapted to realize the steps of the proposed method when being executed by a processor of an accessory device.

Moreover, a software program product is proposed, in which the proposed software program code is stored in a readable memory. Such a software program product can be for instance a separate storage device or a memory that is to be implemented in an accessory device.

The invention proceeds from the idea that an accessory device could be used for receiving data from a second device in the scope of a wireless communication and for hiding the employed wireless communication from a third device having an electrical interface, at least in case the third device is not capable of supporting the data format used in the wireless communication. It is therefore proposed that an accessory device has an interface for a wireless communication and an electrical interface. In addition, the accessory device is adapted to perform a conversion of data having a format required for a wireless communication service to a format that is required for a particular service, like a file access by the third device. It is to be understood that the accessory device may be adapted to perform any further conversion that is required for hiding the wireless communication from the third device, like a signaling protocol conversion including a message format conversion.

As soon as the accessory device is connected via the electrical interface to a third device, the accessory device may connect to a second device via a wireless communication link and make the capabilities of the second device available to the third device.

It is an advantage of the invention that it enables an easy exchange of data between a device comprising an electrical interface and some other device supporting a wireless communication. The invention avoids the need of using a cable between the devices. Since an accessory device is non-integral and detachable, it can be used for flexibly accessing any device having a corresponding electrical interface. It is not required to modify the hardware or the software of the device having the electrical interface, even if this device does not support the involved wireless communication protocol and the employed wireless communication data format.

While the accessory device has been described so far to enable a data transfer from the second, wireless communication enabled device to the third device, it is to be understood that it may equally enable a data transfer from the third device to the wireless communication enabled device.

In one embodiment of the invention, the processing unit is thus further adapted to convert data received via the electrical interface and having a format required for a specific service other than a wireless communication service into a format that is required for a wireless communication service, and to provide the converted data for a transmission via the wireless interface.

The wireless communication interface may support any desired wireless communication technology, in particular any wireless short-range communication technology. It may be for example a Bluetooth^{™} interface that is compliant with the Bluetooth^{™} specification or a WLAN interface that is compliant with a specification of the IEEE 802.11 family.

In one embodiment of the invention, the processing unit is further provided with a security mechanism for limiting a data exchange via the wireless communication interface with a second device to a single predetermined device. In the case of a Bluetooth^{™} interface, this may be realized for instance by means of an authentication, where the accessory device operates as a "slave" device, while the second device operates as a "master" device. In the case of a WLAN interface, this may be realized for instance by means of a Wired Equivalent Privacy (WEP) encryption or by a Wi-Fi Protected Access (WPA) encryption, etc. A special implementation of the accessory device can be provided for a WLAN connection using an ad-hoc mode, in which no Access Point (AP) is used. Ad-hoc mode supports WEP, but not the more secure WPA, which requires an Access Point. So in order to enable the use of WPA, the accessory device could be configured to behave like a WLAN AP, that is, in an infrastructure mode. While emulating an AP in the accessory device somewhat increases the complexity of the accessory device, it is also beneficial for the power consumption of the second device.

In general, the accessory device may thus be a personal accessory device of the user of the second device having the wireless communication capabilities. The association between a second device and the accessory device could already be configured during production and the accessory device be sold together with the second device. Alternatively, the accessory device could be paired later on to a second device using an appropriate application.

A second device could be associated to several accessory devices, which may have different capabilities. An accessory device could also be associated to a plurality of second devices, but this might be less recommendable due to possible limitations of the employed wireless communication technology.

In one embodiment of the invention, the processing unit is adapted to make the accessory device appear like a mass storage device to any third device to which the accessory device is connected via the electrical interface. In this case, the third device could access the files of a second device for read and/or write operations, just as if it was accessing the files of a directly connected mass storage device without having to support any wireless communication technology. This approach takes account of the fact that portable devices are equipped with an increasing memory capacity, which may be used as a mass storage for various purposes. It is to be understood, though, that the accessory device could also be adapted to pretend providing access to any other capability than mass storage, for instance to a print service.

In one embodiment of the invention, the processing unit is further adapted to detect a connection to a third device via the electrical interface and to initiate upon detection of a connection a link to a second device via the wireless communication interface. With Bluetooth^{™}, for instance, the link to the second device can be established directly upon initiation by the accessory device. In the case of WLAN, for instance, the second device may be adapted to scan periodically for a WLAN in the vicinity, and will thus detect as well a WLAN established by the accessory device. The connection could thus be established automatically by the accessory device without requiring any user action.

In an exemplary, advantageous embodiment of the invention, the accessory device is a personal dongle that enables a wireless access to resources through the electrical interface using an automatic and secure connection, which is completely transparent to the user.

In general, the accessory device may be designed to operate only in a single mode, in which it supports a particular service.

In an exemplary embodiment of the invention, however, the processing unit may also be adapted to enter at least two different modes of operation, in which it offers different functions.

An accessory device, which comprises in addition a mass storage itself, for instance, could provide access to the mass storage of a second device in a first mode and access to its own mass storage in a second mode. An accessory device could further support access to a mass storage as a service in a first mode and access to a printer as a service in a second mode.

A mode selection could be performed for example based on capabilities of a third device to which the accessory device is connected via the electrical interface. Such capabilities could be informed to the accessory device by the third device upon the connection. In addition or alternatively, the mode could be set based on a command received from the third device to which the accessory device is connected via the electrical interface. The third device could decide on the mode based on information provided by the accessory device on the capabilities of the accessory device. Such information on capabilities could include for instance an indication of the USB class or classes to which the accessory device is assigned. The mode could thus be selected in accordance with the desired functions, like a mass storage function.

A special selectable mode could also be provided for bypassing the implemented conversion at least partially in case a third device, to which the accessory device is connected via the electrical interface, supports a processing of data having a format that is required for a service provided via the wireless communication interface. For example, it might only be required to convert signaling protocol and message format. The data itself may be maintained in the wireless communication service format, if the third device is adapted to process such data.

The accessory device could also support a complete deactivation of the wireless communication interface in case a third device, to which the accessory device is connected via the electrical interface, comprises itself a corresponding wireless communication interface and the associated processing capabilities. Such a deactivation could be initiated for instance by a command from the third device. For example, if the third device has a proximity radio with better performance, it could deactivate the radio of the accessory device and talk directly to the second device. It has to be noted that this requires the third device to be aware of the deactivation command, which may be achieved by installing corresponding software in the third device.

The accessory device may further comprise a memory. As mentioned above, such a memory could be used to provide an own mass storage as an additional function of the accessory device. In this case, the third device might detect the additional function of the accessory device and ask the user to select one of the functions. The accessory device could offer for example several drives (D:, E:) or several folders in a drive (D:\phone\, D:\dongle) so that the user of the third device can easily access all files in the accessory device and the second device.

A memory of the accessory device could moreover be used for buffering data received via at least one of the interfaces before applying a respective conversion. This ensures that no data is lost in case data is received faster than it can be converted and/or transmitted. Further, it allows smoothing possible data transfer inequalities.

A memory of the accessory device could also store some executable application software code that can be loaded into a second device and be executed in this second device. The application could be for instance a mini PC suite or a Java^{™} or Windows® mini application, etc. It could be used for instance for supporting a specific kind of a file access, like enabling a user to edit contacts or calendar entries in the second device by means of the third device, etc.

The accessory device can be used for enabling a connection between any type of second device comprising a wireless communication interface and any type of third device comprising a USB host or peripheral receptacle.

The second device comprising a wireless communication interface could be in particular, though not exclusively, a portable device, for instance a mobile phone, a PDA, a camera, a portable MP3 player or a portable hard disk (HD) etc.

The second device may be adapted to notify a user when an established link to the accessory device via the wireless communication interface is lost. This ensures that a user does not forget to take the accessory device along when leaving the vicinity of the third device.

The third device comprising electrical interface could be for instance a PC, a printer or a media player, like a home stereo system, a car stereo system, a display, a TV set, etc.

If the electrical interface is a USB plug, the accessory device can be implemented on the USB side in particular as a peripheral USB device that can be connected to a host USB device, like a PC. Alternatively, the accessory device could also be implemented as a host USB device that may be connected to a peripheral USB device, like a printer.

In a further alternative, the accessory device could also be implemented as a dual-role USB device, for example as defined in the "On-The-Go Supplement to the USB 2.0 Specification", Revision 1.0a, June 23, 2003. In case the accessory device is a dual-role USB device, it could select its role automatically depending on where it is plugged and thus depending on discovered capabilities. For example, if a dual-role accessory device is plugged to a USB host and the accessory device becomes a USB peripheral, then it may decide whether to offer multiple USB devices, like several drives, a standard Bluetooth^{™} dongle stack, etc., or only a single USB device, like a mass-storage device. With other host devices than a PC, it might be better if the accessory device behaves like a single drive. If the accessory device is plugged in contrast to a USB peripheral, like a printer, then the accessory device may become a host and discover what type of USB peripheral it has been connected to.

For a second aspect of the invention, an accessory device is described, which comprises a storage component, a wireless communication interface and an electrical interface. The accessory device further comprises a processing unit configured to coordinate an access to the storage component via the wireless communication interface and the electrical interface.

The processing unit can be implemented in hardware and/or software. Alternatively, it could be for instance a chip or chipset realizing the required functions.

For the second aspect of the invention, moreover a system is described, which comprises the apparatus according to the second aspect of the in invention and in addition a second device with an electrical interface configured to connect to the electrical interface of the accessory device.

For the second aspect of the invention, moreover a method is described, which comprises receiving signals and/or data for accessing a storage component of an accessory device via at least one of a wireless communication interface of the accessory device and an electrical interface of the accessory device. The method further comprises coordinating an access to the storage component.

For the second aspect of the invention, moreover a software program code is described, which is adapted to realize the method according to the second aspect of the invention when being executed by a processing unit of an accessory device.

For the second aspect of the invention, finally, a software program product is described, in which the software program code according to the second aspect of the invention is stored in a readable memory.

Also for the second aspect of the invention, the electrical interface could be of any desired type. It could be for instance a memory card interface or a USB plug.

Also for the second aspect of the invention, the wireless communication interface can be of any desired type, for instance a Bluetooth^{TM} interface, a WLAN interface or even a GPRS interface.

The second aspect of the invention proceeds from the consideration that memory space in an accessory device can usually be accessed only via a single interface. It is therefore proposed that an accessory device is provided with a processing unit, which manages an access to a memory space via a wireless interface on the one hand and a non-wireless interface on the other hand.

Thus, the usability of the accessory device is enhanced. Accessibility via two different types of interfaces extents the fields of application of the accessory device. Further, the memory space can be accessed by a device via the wireless communication interface, while the accessory device is still connected to another device via the electrical interface without requiring a disconnection. The approach also allows an indirect exchange of data between two devices which do not have matching interfaces via the memory space of the accessory device.

It is moreover technically feasible to implement the described accessory device with current technology. At least devices connecting to the electrical interface do not have to be modified in hardware or software. Only in some cases, device connecting to the wireless communication interface might have to be adapted to this new use case, for instance by installing corresponding software.

It is to be understood that an embodiment of the second aspect of the invention could also be combined with embodiment of the first aspect of the invention in a single accessory device. Further, it is to be understood that all details presented for the first aspect of the invention may also be applied by themselves or in combination to embodiments of the second aspect of the invention.

The accessory device of the second aspect of the invention could be for example a new type of memory card, in particular though not exclusively a new type of SD, miniSD or CF card. Such a memory card could look just like a normal memory card. That is, when using the electrical interface, by inserting the card into a device like a digital camera or an MP3 player, the card appears to this device to be a conventional memory card. This way the device does not need any drivers or specific operating system for accessing the memory space in the card, and it is usable for example with any conventional digital camera. But in addition, it provides wireless file access for external devices, like PCs or mobile phones, to the memory space in the card. By means of the wireless communication interface in the card, the files in the memory of the card can be accessed wirelessly from an external device supporting the provided wireless technology, as well as from the device where the card is inserted through the standard electrical interface of the card.

Exemplary use cases are a wireless access to images in digital cameras and songs in MP3 players, using a mobile phone or a PC. For example, a user may backup the images from the camera to the phone to prevent that the memory card runs out of space, or copy songs to an MP3 player easily and wirelessly. Further, photos taken by a digital camera could be posted automatically in a blog by the phone over 3G.

### BRIEF DESCRIPTION OF THE FIGURES

Other objects and features of the present invention will become apparent from the following detailed description considered in conjunction with the accompanying drawings.
- Fig. 1: is a schematic diagram of a system according to a first embodiment of the invention;
- Fig. 2: is a diagram of an exemplary appearance of an accessory device according to the invention;
- Fig. 3: is an exemplary message flow chart illustrating an operation in the system of Figure 1;
- Fig. 4: is a schematic diagram of a system according to a second embodiment of the invention;
- Fig. 5: is an exemplary message flow chart illustrating an operation in the system of Figure 4;
- Fig. 6: is an exemplary message flow chart illustrating an alternative operation in the system of Figure 1 ;
- Fig. 7: is a schematic diagram of a system according to an embodiment of the second aspect of the invention; and
- Fig. 8: is an exemplary flow chart illustrating an operation in an accessory device of Figure 7.

### DETAILED DESCRIPTION OF THE INVENTION

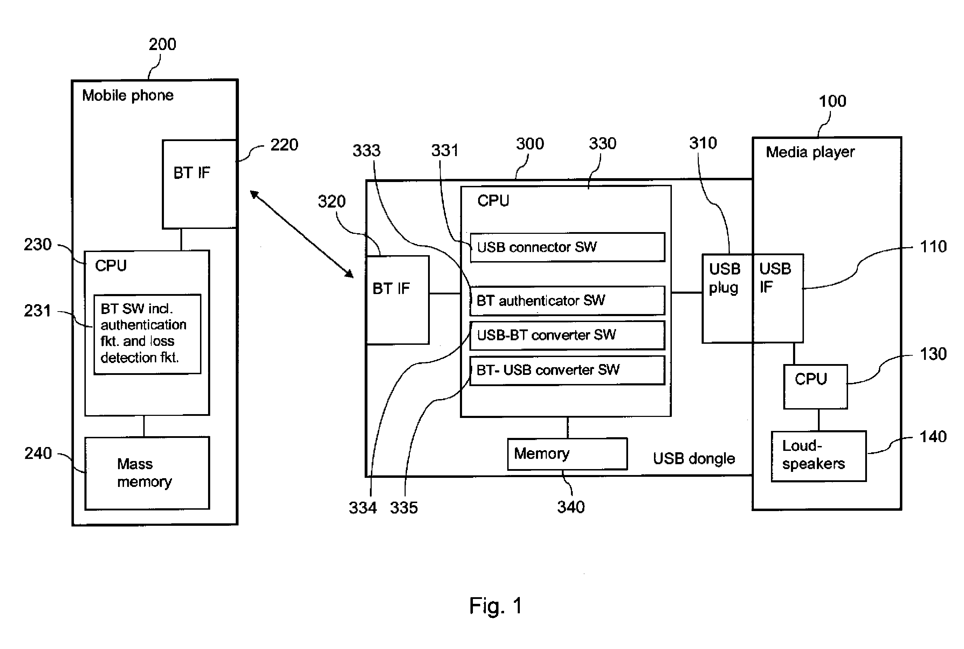

Figure 1 is a schematic diagram of a system, which enables an extended usability of the USB connection of a device in accordance with a first exemplary embodiment of the invention.

The system comprises a media player 100, a mobile phone 200 and a USB dongle 300.

The media player 100 can be for instance a USB enabled car audio system. It comprises a USB interface 110, for example a USB Standard A receptacle, a USB Mini A receptacle, or a USB Mini AB receptacle. The USB interface 110 is connected via a CPU 130 or some other processing component to loudspeakers 140 of the media player 100. The USB interface 110 can be provided originally, for instance, for plugging MP3 players.

The mobile phone 200 may be implemented like a conventional mobile phone. It comprises a Bluetooth^{™} (BT) interface 220, a mass memory 240 and a CPU 230 connecting the mass memory 240 to the BT interface 220. The CPU 230 is adapted to execute various implemented software program codes, which may be stored for instance in the mass memory 240 and be retrieved by the CPU 230 for execution whenever required. The implemented software program codes include a BT manager 231 with an authentication function and a loss detection function.

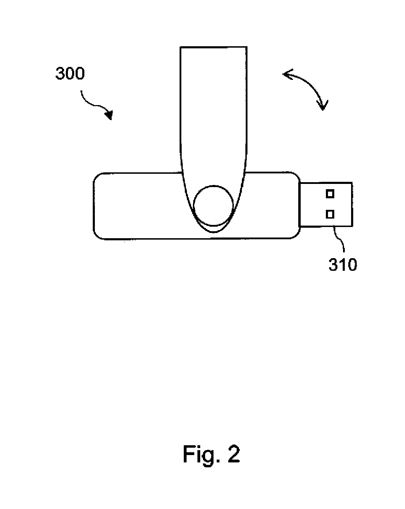

The USB dongle 300 is an accessory device according to an embodiment of the invention. It may have the look of a standard pen drive, as illustrated in Figure 2. It comprises a BT interface 320. It further comprises a USB interface 310, which may comprise a Standard A plug or a Mini A plug. A CPU 330 is connected to the BT interface 320 on the one hand and to the USB interface 310 on the other hand. The CPU 330 is adapted to execute various implemented software program codes. The implemented software program codes include a USB connector 331, a BT authenticator 333, a USB-to-BT converter 334 and a BT-to-USB converter 335. The USB dongle 300 further comprises a memory 340 with a section for buffering transition data. The memory 340 may also comprise a section for storing some or all of the implemented software program codes 331-335, which may then be retrieved by the CPU 330 for execution whenever required. In addition, the memory 340 could store some application that can be provided to another device via the USB interface 310. It is to be understood that further software program codes may be implemented for any desired function, and that the memory 340 could provide in addition a section for mass storage, etc.

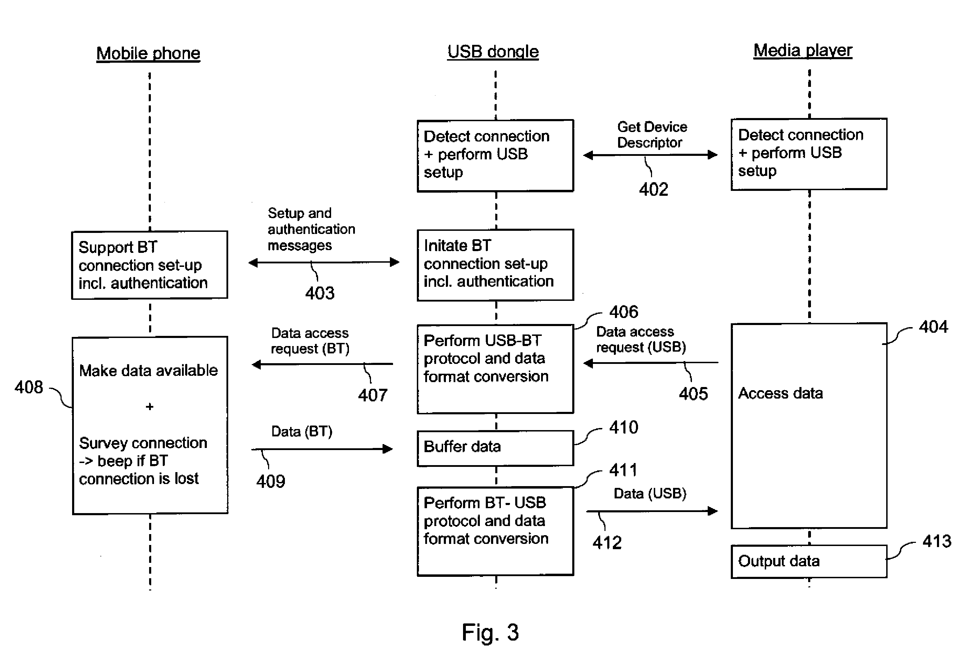

An operation according to an embodiment of the invention in the system of Figure 1 will now be described with reference to the message flow chart of Figure 3. In this operation, any communication between the USB dongle 300 and the media player 100 is carried out via the USB interfaces 310, 110, and any communication between the USB dongle 300 and the mobile phone 200 is carried out via the BT interfaces 320, 220.

The USB dongle 300 is a personal dongle of the user of the mobile phone 200, which is configured to work only with this mobile phone 200. It may be carried along by the user, for example in a key ring. When a user wants to access the files in the mass memory 240 of the mobile phone 200 by means of some other device, like a PC or a home or car stereo system, the user simply plugs the USB dongle 300 into a USB port of this device.

Currently, the user may wish to listen to MP3 files in the mobile phone 200 by means of the media player 100. To this end, the user connects the USB dongle 300 to the USB interface 110 of the media player 100.

The USB dongle 300 and the media player 100 detect the new USB connection and a regular USB setup is performed. In this scope, the media player 100 obtains the device descriptor from the USB connector 331 of the USB dongle 300 by means of a Get Device Descriptor command to discover the functionality of the USB dongle 300 and prepares the data exchange via the USB interface 110 (step 402). When receiving a Get Device Descriptor command, the USB dongle 300 knows that the media player 100 is a host. Further, it knows that the media player 100 only supports a USB mass media profile, if the media player 100 only initializes the mass-storage profile. Another device like a PC could initialize other USB modes as well.

As soon as the USB connector 331 of the USB dongle 300 detects a USB connection, the BT authenticator 333 may further automatically initiate a secure BT connection with the mobile phone 200 by informing the mobile phone 200 about the detected connection. The BT manager 231 of the mobile phone 200 and the BT authenticator 333 then perform a regular BT connection set-up. In this scope, the mobile phone 200 is also authenticated at the USB dongle 300. As a result, only this particular mobile phone 200 is able to use the established USB connection of the USB dongle 300 by using a BT access (step 403).

The media player 100 starts in the meantime an access to the mass memory 240 of the mobile phone 200 just as if it was a mass memory that is directly available via a USB connection (step 404).

The media player 100 transmits to this end a data access request in USB format and using the USB signaling protocol to the USB dongle 300 (step 405).

The USB-to-BT converter 334 performs a USB-to-BT signaling protocol conversion in an adaptation layer and a USB-to-BT data format conversion (step 406), and transmits the request in BT format and using the BT signaling protocol to the mobile phone 200 (step 407).

The BT manager 231 enables thereupon a corresponding access to the mass memory 240 (step 408).

As a result, for instance MP3 files stored in the mass memory 240 or information on the stored MP3 files can be provided to the USB dongle 300 (step 409). At the USB dongle 300, any received data is first buffered by the CPU 330 in the memory 340 (step 410). The BT-to-UBS converter 335 then performs a BT-to-UBS signaling protocol conversion and a BT-to-UBS data format conversion in an adaptation layer (step 411), and transmits the data in USB format and using the USB signaling protocol to the media player 100 (step 412).

The CPU 130 of the media player 100 processes the received data for presentation to a user. Based on provided information, for instance, a list of available MP3 files could be presented for selection on a display (not shown). A selected MP3 file could then be accessed by means of an additional request (step 405). A provided MP3 file may be output via the loudspeakers 140 (step 413).

While the BT manager 231 of the mobile phone 200 manages the access to the mass memory 240 (step 408), it monitors at the same time whether the BT connection is interrupted, for instance because the distance to the USB dongle 300 becomes too large. When the connection is interrupted without a preceding indication that the USB connection has been interrupted, the BT manager 231 causes the mobile phone 200 to output some warning to the user, for instance in the form of a beep. This ensures that the user does not forget to remove the USB dongle 300 when it is not required anymore.

With the presented embodiment of the invention, the user is thus able to listen to the MP3 files in the mobile phone 200 without taking the mobile phone 200 from his/her pocket.

To the media player 100, the USB dongle 300 looks just like a regular mass storage device. Thus, the media player 100 is able to access the data in the mobile phone 200 without supporting any Bluetooth^{™}. The wireless link may rather be hidden completely from the media player 100.

In general, the presented embodiment of an accessory device 300 allows accessing the files in a mobile phone 200 via any device having a USB port.

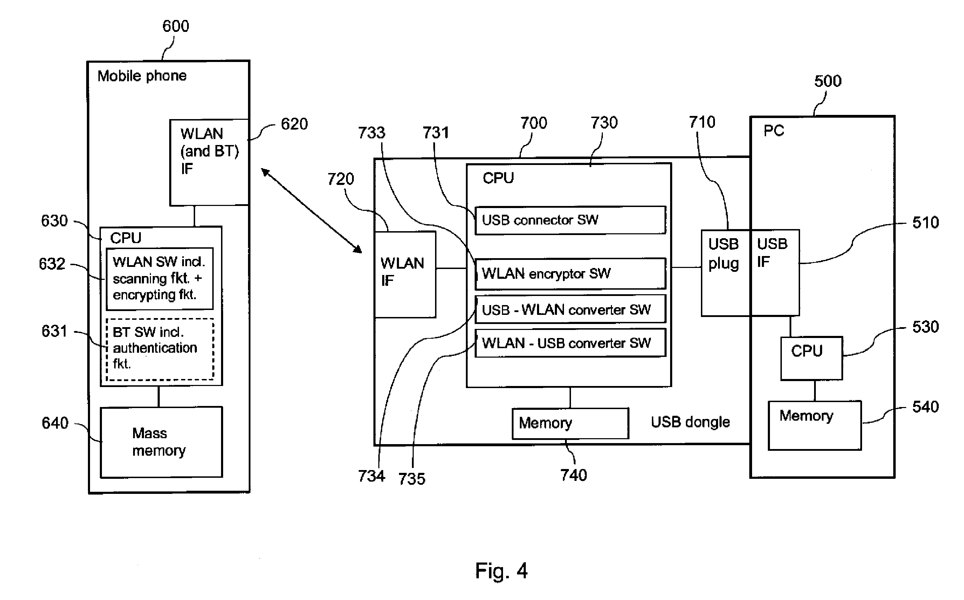

Figure 4 is a schematic diagram of a system, which enables an extended usability of the USB connection of a device in accordance with a second exemplary embodiment of the invention.

The system comprises a PC 500, a mobile phone 600 and a USB dongle 700.

The PC 500 comprises a USB interface 510, for example a USB Standard A receptacle. The USB interface 510 is connected via a CPU 530 or some other processing component to a memory 540 of the PC 500.

The mobile phone 600 may be implemented like a conventional mobile phone. It comprises a WLAN interface 620 and optionally an additional BT interface. It further comprises a mass memory 640 and a CPU 630 connecting the mass memory 640 to the WLAN interface 620 and the optional BT interface. The CPU 630 is adapted to execute various implemented software program codes, which may be stored for instance in the mass memory 640 and be retrieved by the CPU 630 for execution whenever required. The implemented software program codes include a WLAN manager 632 including a scanning function. In case a BT interface is provided, the implemented software program codes include in addition a BT manager 631 with an authentication function and a loss detection function.

The USB dongle 700 is an accessory device according to an embodiment of the invention. It comprises a WLAN interface 720. It further comprises a USB interface 710, which may comprise a Standard A plug or a Mini A plug. A CPU 730 is connected to the WLAN interface 720 on the one hand and to the USB interface 710 on the other hand. The CPU 730 is adapted to execute various implemented software program codes. The implemented software program codes include a USB connector 731, a WLAN encryptor 733, a USB-to-WLAN converter 734 and a WLAN-to-USB converter 735. The USB dongle 700 further comprises a memory 740 with a section for buffering transition data. The memory 740 may also comprise a section for storing some or all of the implemented software program codes 731-735, which may then be retrieved by the CPU 730 for execution whenever required. It is to be understood that further software program codes may be implemented for any desired function, and that the memory 740 could provide in addition a section for mass storage, etc.

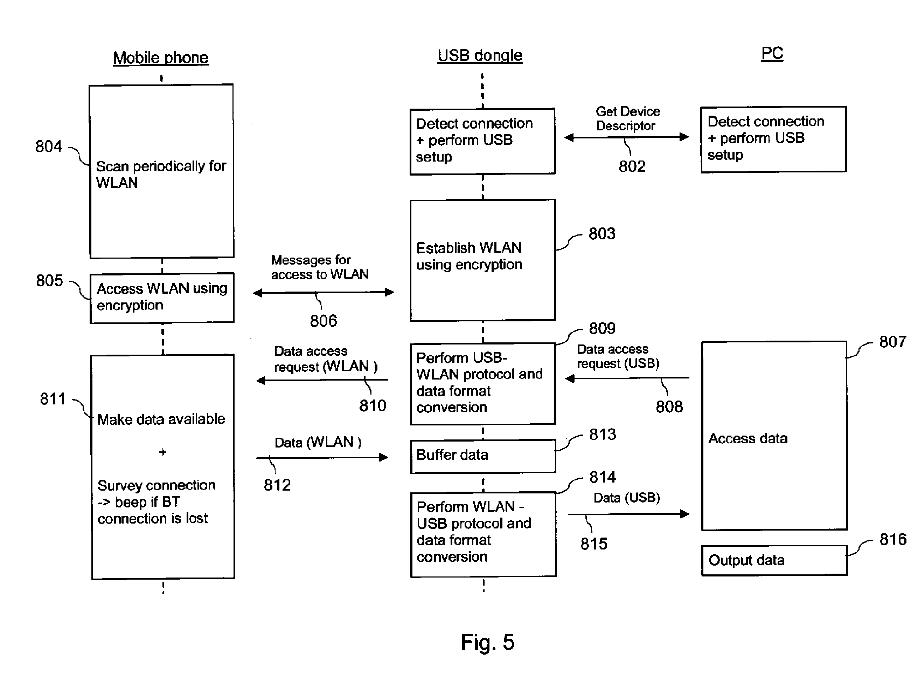

An operation according to an embodiment of the invention in the system of Figure 4 will now be described with reference to the message flow chart of Figure 5. In this operation, any communication between the USB dongle 700 and the PC 500 is carried out via the USB interfaces 710, 510, and any communication between the USB dongle 700 and the mobile phone 600 is carried out via the WLAN interfaces 720, 620.

The USB dongle 700 is again a personal dongle of the user of the mobile phone 600, which is configured to work only with this mobile phone 600. A user may plug the USB dongle 700 into a USB port of any device.

Currently, the user may wish to copy files from the mass memory 640 of the mobile phone 600 to the PC 500. To this end, the user connects the USB dongle 700 to the USB interface 510 of the PC 500.

A USB connection between the USB dongle 700 and the PC 500 is established (step 802) in the same manner as in step 402 described with reference to Figure 3 between the USB dongle 300 and the media player 100.

As soon as the USB connector 731 of the USB dongle 700 detects a USB connection, the WLAN connector 733 may further set up a WLAN (step 803).

The mobile phone 600 scans periodically for a USB dongle WLAN (step 804) and will thus detect the WLAN.

The WLAN manager 632 causes the mobile phone 600 to access the detected WLAN (step 805). The WLAN is secured, for example by WEP or WPA encryption implemented in a Medium Access Control (MAC) filter, so that only the mobile phone 600 can join the WLAN (step 806).

Once the WLAN has been set up and the mobile phone 600 has joined the WLAN, the PC 500 may access the mass memory 640 of the mobile phone 600 via the USB dongle 700 (steps 807-816). It is to be understood that the access to the mass memory 640 could also be used for storing files from the memory 540 of the PC 500 in the mass memory 640 of the mobile phone 600. In this case, the data from the PC 500 is buffered in memory 740 before it is converted in the USB dongle 700.

The access to the mass memory 640 is performed in the same manner as in steps 404 to 413 described above with reference to Figure 3. Only in this case, a USB-to-WLAN conversion (step 809) is used instead of a USB-to-BT conversion (step 406), and a WLAN-to-USB conversion (step 814) is used instead of a BT-to-USB conversion (step 411). Further, the files that are retrieved from the memory 640 upon selection could be stored in the memory 540 (step 816) of the PC 500 instead of being presented to a user (step 413).

In case the user wishes not only to access stored files of the mobile phone 600 but to access special resources of the mobile phone 600, for example edit contacts or a calendar, he/she might manually load an executable application, which is provided for this purpose, from the memory 740 of the USB dongle 700 to the CPU 530 of the PC 500. When the application is executed by the CPU 530, it may then support the user in accessing the special resources, for example editing contacts or calendar entries in the mobile phone 600 via a user input of the PC 500.

Currently, more mobile device support Bluetooth^{™} than WLAN, and thus more devices could benefit from USB dongle 300, but WLAN offers a significantly larger bandwidth.

If the mobile phone 600 comprises as well a BT interface, there may be a first USB dongle 700 associated to the mobile phone 600 that supports a USB access to some device via a WLAN connection and a second USB dongle associated to the mobile phone 600 that supports a USB access to some device via a BT connection, as described with reference to Figures 1 and 3.

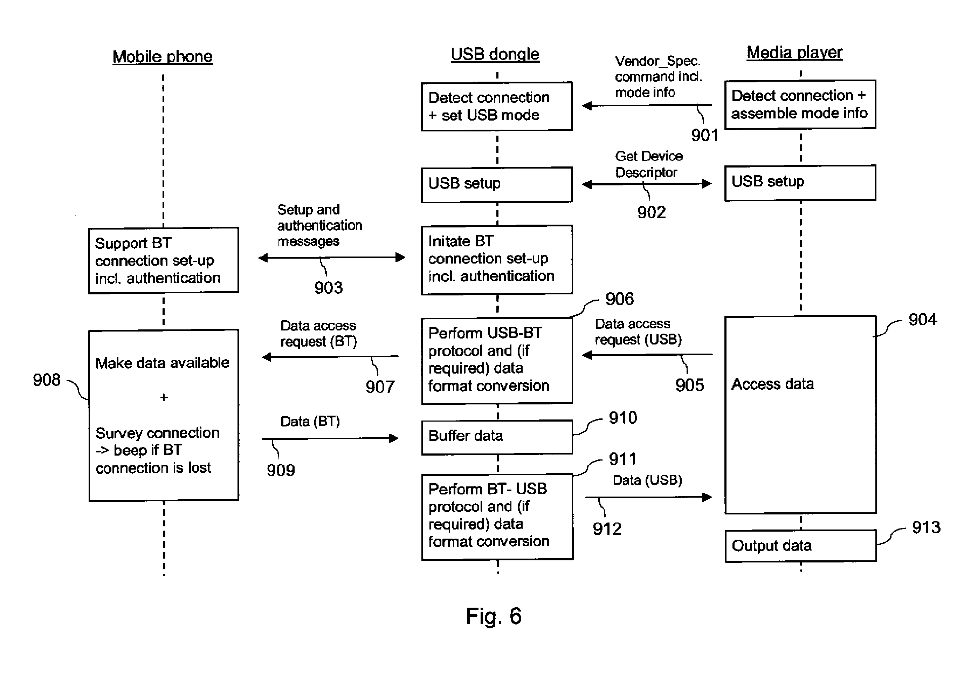

The message flow chart of Figure 6, finally, presents an alternative operation that could be implemented in the system of Figure 1. The general operation is quite similar to the operation described above with reference to Figure 3, and mainly the differences will be described in the following.

When a user plugs the USB dongle 300 for example to the media player 100, the media player 100 detects the new USB connection and assembles mode information. This mode information may include for example all classes and interfaces that are supported by the media player 100, including for instance information on the capabilities of the media player 100 to process data in BT format, which is received via the USB interface 110. The mode information may be assembled for example by the CPU 130 of the media player 100.

The assembled mode information is transmitted in a vendor specific command to the USB dongle 300 (step 901).

The USB connector 331 of the USB dongle 300 detects the USB connection and receives the vendor specific command. The included mode information is evaluated by the USB connector 331 for selecting and setting a particular USB mode of the USB dongle 300. In the present case, for instance, the mode information might not include any indication of BT capabilities of the media player 100, only an indication that the media player 100 supports an access to external mass memories. Thus, the USB dongle 300 is set to a USB mode, which enables an access to the mass memory 240 of the mobile phone 200 including a conversion between USB and BT data formats (step 901).

In case the mode information from the media player 100 includes an indication that the media player 100 supports a processing of BT signals and has access to a BT interface, the USB dongle 300 may be set to a deactivated mode, since in this case, the media player 100 may access the mobile phone 200 directly using a Bluetooth^{™} connection.

Alternatively or in addition, the media player 100 could be adapted to force the USB dongle 300 into a preferred mode, for instance by a vendor specific command. To this end, the media player 100 could first use a vendor specific command for requesting from the USB dongle 300 information on all classes and subclasses supported in all modes of the USB dongle 300.

Thereafter, a regular USB setup is performed. That is, the media player 100 obtains the device descriptor from the USB connector 331 of the USB dongle 300 by means of a Get Device Descriptor command and prepares the data exchange via the USB interface 110 (step 902).

As soon as the USB connector 331 of the USB dongle 300 detects a USB connection, the BT authenticator 333 may initiate a BT connection with the mobile phone 200 (step 903) as in step 403 described further above.

Moreover, the media player 100 starts an access to the mass memory 240 of the mobile phone 200 (steps 904-913) just as in steps 404 to 413 described further above.

It has to be noted, though, that in case the media player 100 supports Bluetooth^{™}, the USB-to-BT converter 335 might only have to perform a signaling protocol conversion in step 906, as the media player 100 could be caused by a corresponding mode indication in response to the Get Device Descriptor request to provide any data in the USB massages in BT format. Further, the BT-to-UBS converter 335 has to perform in this case only a signaling protocol conversion in step 911, as the media player 100 is able in this case to process data in BT format. The BT data could thus simply be inserted into a USB message.

With the embodiment of an operation presented in Figure 6, a suitable one of different modes of the USB dongle 300 can thus be selected and set automatically.

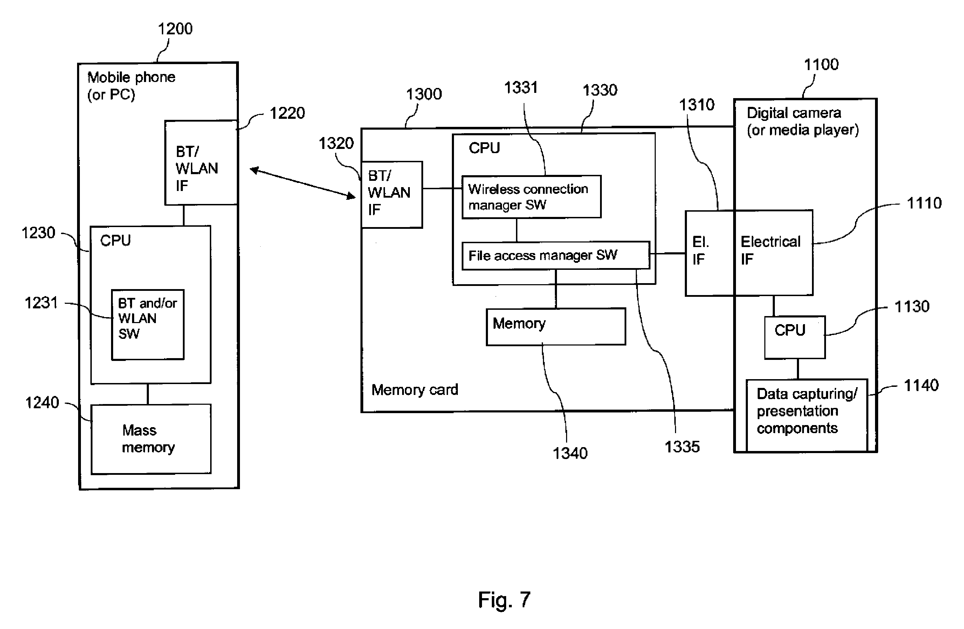

Figure 7 is a schematic diagram of a system, which enables an extended usability of a memory card connection of a device in accordance with an exemplary embodiment of the second aspect of the invention.

The system comprises a digital camera 1100, a mobile phone 1200 and a memory card 1300.

The digital camera 1100 may be implemented exactly like a conventional digital camera. It comprises an electrical interface 1110, for example a normal SD memory card slot. The interface 1110 is connected via a CPU 1130 or some other processing component to data capturing and presentation components 1140. It is to be understood that device 1100 could also be some other device, like an MP3 player comprising as loudspeakers 1140.

The mobile phone 1200 may be implemented basically like a conventional mobile phone. It comprises a Bluetooth^{™} (BT) or a WLAN interface 1220, a mass memory 1240 and a CPU 1230 or some other processing component connecting the mass memory 1240 to the interface 1220. The CPU 1230 is adapted to execute various implemented software program codes, which may be stored for instance in the mass memory 1240 and be retrieved by the CPU 1230 for execution whenever required. The implemented software program codes include a specific program code 1231 for managing a communication with a memory card via interface 1220. It is to be understood that device 1200 could also be some other device, like a PC.

The memory card 1300 is an accessory device according to an embodiment of the second aspect of the invention. It may have the size and the look of a standard memory card. It comprises a BT or WLAN interface 1320. It further comprises an electrical interface 1310, which may correspond to the standard electrical contacts of a conventional memory card. A CPU 1330 or some other processing component is connected to the wireless interface 1320 on the one hand and to the electrical interface 1310 on the other hand. The CPU 1330 is adapted to execute various implemented software program codes. The implemented software program codes include a wireless communication manager code 1331 and a file access manager code 1335. The memory card 1300 further comprises a memory 1340 as a storage component for mass storage of data. The memory 1340 may also comprise a section for storing some or all of the implemented software program codes 1331, 1335, which may then be retrieved by the CPU 1330 for execution whenever required.

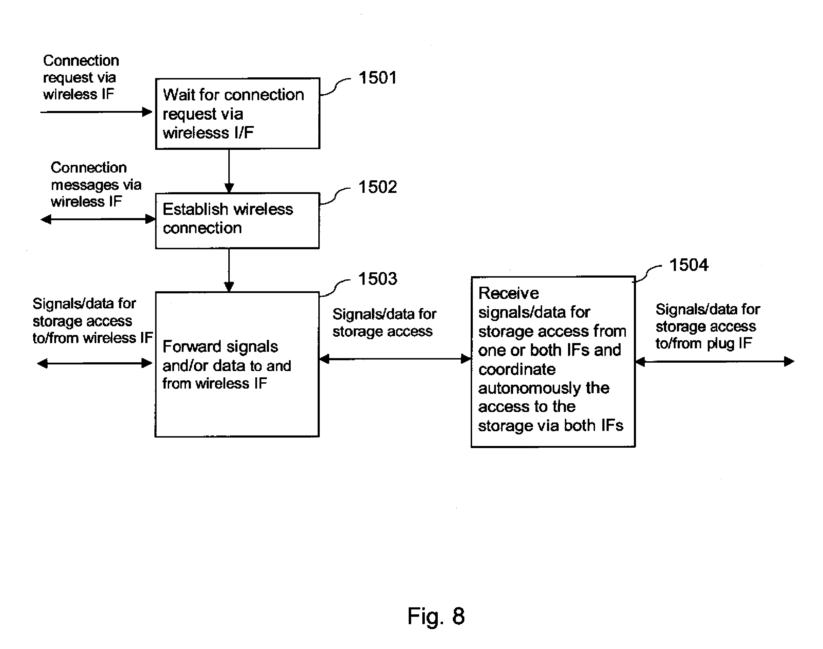

An operation according to an embodiment of the invention in the system of Figure 7 will now be described with reference to Figure 8. Figure 8 is a flow chart which presents the operations of the CPU 1330 of the memory card 1300.

The memory card 1300 is assumed to be inserted in the memory card slot of the digital camera 1100. To the digital camera 1100, the memory card 1300 appears to be a conventional memory card.

When an image is captured by the data capturing components 1140 of the camera 1100, the CPU 1130 provides the image data and control signals via the interface 1110 to the memory card 1300 for storing the image data in the memory 1340. Further, the CPU 1130 may request via the interface 1110 image data from the memory 1340 for presentation to a user.

On the other hand, a user may wish to transfer data from the memory 1340 of the memory card 1300 to the larger memory 1240 of the mobile phone 1200 using a wireless connection, to free space in memory 1340 for new image data. In this case, the CPU 1230 executes program code 1231, which functions as client software. At first, it transmits a request via interface 1220 to establish a wireless connection with the memory card 1300. Once a connection has been established, it handles a desired file transfer to or from the memory card 1300.

In the memory card 1300, the wireless connection manager 1331 continuously or periodically scans for incoming connection requests via interface 1320 (step 1501).

When such a request is detected, the wireless connection manager 1331 takes care of establishing the connection in cooperation with the CPU 1230 (step 1502). The actual initiation and establishment of the connection, including security aspects, can be similar as described with reference to Figures 3 for BT and Figure 5 for WLAN. Only in the present embodiment, the connection is assumed by way of example to be initiated by the memory card, not by the mobile phone.

Subsequently, the wireless connection manager 1331 takes care of forwarding any signals and data arriving from the mobile phone 1200 via the interface 1320 to the file access manager 1335, and of forwarding any signals and data provided by the file access manager 1335 for the mobile phone 1200 for transmission to the interface 1320 (step 1503).

Any signals and data received from the digital camera 1300 via the electrical interface 1310 are provided directly to the file access manager 1335.

The file access manager 1335 coordinates the access to the memory 1340 by the digital camera 1300 and the mobile phone 1200 (step 1504). It handles the file access such that the two devices 1100 and 1200 do not access the same file at the same time.

With the embodiment of Figures 7 and 8, the memory space in an accessory device can thus be shared easily by devices connecting to the accessory device via different types of interfaces.

It is to be noted that the described embodiments constitute only some of a variety of possible embodiments of the invention.

## Claims

1. Accessory device (300;700) comprising:
- a wireless communication interface (320;720);
- an electrical interface (310;710); and
- a processing unit (330;730) adapted to convert data received via said wireless communication interface (320;720) and having a format required for a wireless communication service into a format required for a specific service other than a wireless communication service, and to provide said converted data for a transmission via said electrical interface (310;710).

2. Accessory device (300;700) according to claim 1, wherein said processing unit (330;730) is further adapted to convert data received via said electrical interface (310;710) and having a format required for a specific service other than a wireless communication service into a format required for a wireless communication service, and to provide said converted data for a transmission via said wireless interface (320; 720) .

3. Accessory device (300;700) according to claim 1, wherein said wireless communication interface (320;720) is one of a Bluetooth^{™} interface (320) and a Wireless Local Access Network interface (720).

4. Accessory device (300;700) according to claim 1, wherein said processing unit (330;730) is further provided with a security mechanism for limiting a data exchange via said wireless communication interface (320;720) with another device to a single predetermined other device (200;600).

5. Accessory device (300;700) according to claim 1, wherein said processing unit (330;730) is adapted to make said accessory device (300;700) appear like a mass storage device to any device (100;500) to which said accessory device (300;700) is connected via said electrical interface (310;710).

6. Accessory device (300;700) according to claim 1, wherein said processing unit (330;730) is further adapted to detect a connection to another device (100;500) via said electrical interface (310;710) and to automatically initiate upon detection of a connection a link to a further device (200;600) via said wireless communication interface (320;720).

7. Accessory device (300;700) according to claim 1, wherein said processing unit (330;730) is adapted to enter at least two different modes of operation, in which it offers different functions.

8. Accessory device (300;700) according to claim 7, wherein said processing unit (330;730) is further adapted to perform a mode selection based on capabilities of a device (100;500) to which said accessory device (300;700) is connected via said electrical interface (310;710).

9. Accessory device (300;700) according to claim 7, wherein said processing unit (330;730) is further adapted to set a mode based on a command received from a device (100;500) to which said accessory device (300;700) is connected via said electrical interface (310; 710) .

10. Accessory device (300;700) according to claim 7, wherein one of said modes comprises bypassing said conversion in case a device to which said accessory device (300;700) is connected via said electrical interface (310;710) supports a processing of data having a format required for said wireless communication service (320;720).

11. Accessory device (300;700) according to claim 1, wherein said processing unit (330;730) is adapted to deactivate said wireless communication interface (320;720), in case a device to which said accessory device (300;700) is connected via said electrical interface (310;710) comprises itself a corresponding wireless communication interface and associated processing capabilities.

12. Accessory device (300;700) according to claim 1, further comprising a memory (340;740).

13. Accessory device (300;700) according to claim 12, wherein said memory (340;740) is configured for buffering data received via at least one of said interfaces (310,320;710,720) before applying a data conversion.

14. Accessory device (300;700) according to claim 12, wherein said memory (340;740) is configured for storing an executable application supporting an access to data in a device (200;600) accessing said accessory device (300;700) via said wireless communication interface (320;720), and wherein said processing unit (330;730) is adapted to load said executable application to another device (100;500) via said electrical interface (310;710) for execution in said other device (100;500).

15. Accessory device (300;700) according to claim 1, wherein said electrical interface (310;710) is a universal serial bus plug.

16. System comprising an accessory device (300;700) with
- a wireless communication interface (320;720);
- an electrical interface (310;710); and
- a processing unit (330;730) adapted convert data received via said wireless communication interface (320;720) and having a format required for a wireless communication service into a format required for a specific service other than a wireless communication service, and to provide said converted data for a transmission via said electrical interface (310;710);
and a second device (200;500) with a wireless communication interface (220;520) adapted to exchange data with said wireless communication interface (320;720) of said accessory device (300;700).

17. System according to claim 16, wherein said second device (200;600) is a mobile phone.

18. System according to claim 16, wherein said second device (200;600) is adapted to notify a user when an established link to said accessory device (300;700) via said wireless communication interface (320;720) is lost.

19. System according to claim 16, wherein said second device (200;600) is adapted to scan periodically for said accessory device (300;700).

20. System according to claim 16, further comprising a third device, wherein said third device comprises an electrical interface (110;510) fitting to said electrical interface (310;710) of said accessory device (300;700).

21. System according to claim 16, wherein said electrical interface (310;710) is a universal serial bus plug.

22. Method comprising:
- receiving data via a wireless communication interface (320;720) of an accessory device (300;700);
- converting data received via said wireless communication interface (320;720) and having a format required for a wireless communication service into a format required for a specific service other than a wireless communication service; and
- providing said converted data for transmission via an electrical interface (310;710) of said accessory device (300;700).

23. Method according to claim 22, wherein said electrical interface (310;710) is a universal serial bus plug.

24. Software program code (335;735), which is adapted to realize the following steps when being executed by a processor (330;730) of an accessory device (300;700):
- receiving data via a wireless communication interface (320;720) of said accessory device (300;700);
- converting data received via said wireless communication interface (320;720) and having a format required for a wireless communication service into a format required for a specific service other than a wireless communication service; and
- providing said converted data for transmission via an electrical interface (310;710) of said accessory device (300;700).

25. Software program code (335;735) according to claim 24, wherein said electrical interface (310;710) is a universal serial bus plug.

26. Software program product, in which software program code (335;735) according to claim 24 is stored in a readable memory.
